# EUROPEAN PATENT APPLICATION

(11) **EP 4 775 512 A1**
(43) Date of publication of application: **15.07.2026**
(21) Application number: 25151198.6
(22) Date of filing: 10.01.2025
(51) Int. Cl.: B65G 1/04

(54) **VEHICLE CONNECTION DEVICE**

(71) Applicant: AutoStore Technology AS, 5578 Nedre Vats (NO)
(72) Inventor: AUSTRHEIM, Trond, 5578 Nedre Vats (NO); FITJE, Martin, 5578 Nedre Vats (NO); GJERDEVIK, Øystein, 5578 Nedre Vats (NO); MYRBAKKEN, Joakim A, 5578 Nedre Vats (NO)
(74) Representative: Kilburn & Strode LLP

(57) **Abstract**

The disclosure relates to a connection device (502) configured to connect a second vehicle (506) to a first vehicle (504) in an automated storage and retrieval system. The connection device comprises a support member (510) attachable to the first vehicle, and a bracket (508) engaged with the support member to have substantially free movement in a Z-direction along the support member. The bracket is configured to move in the Z-direction to connect the second vehicle to the first vehicle when the second vehicle is adjacent to the first vehicle, such that the first vehicle is capable of moving the second vehicle in the X-direction and the Y-direction

## Description

### TECHNICAL FIELD

The disclosure relates to a connection device. More particularly, it relates to a connection device configured to connect vehicles in an automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

The robotic container-handling vehicles are capable of travelling in X and Y directions along the rails. A robotic container-handling vehicle may malfunction and require recovery from its position on said rails.

One known approach to recovering a malfunctioned robotic container-handling vehicle is to use a second vehicle to push the malfunctioned vehicle to an area where it can be removed from the system, or repaired. However, pushing the malfunctioned vehicle offers limited control in the movement of the malfunctioned vehicle.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 is a first perspective view of a first vehicle connected to a second vehicle by a connection device;
Fig. 6 is a second perspective view of a first vehicle connected to a second vehicle by a connection device;
Fig. 7 is a top-down view of a first vehicle connected to a second vehicle by a connection device;
Fig. 8 is a side view of a first vehicle connected to a second vehicle by a connection device;
Fig. 9 is a first enhanced perspective view of a first vehicle connected to a second vehicle by a connection device;
Fig. 10 is a second enhanced perspective view of a first vehicle connected to a second vehicle by a connection device;
Fig. 11 is a further enhanced perspective view of a first vehicle connected to a second vehicle by a connection device;
Fig. 12 is a cross-sectional diagram of a bracket of the connection device;
Fig. 13 is a perspective view of the bracket engaged with the second vehicle;
Fig. 14 is a first perspective view of the bracket disengaged from the second vehicle;
Fig. 15 is a second perspective view of the bracket disengaged from the second vehicle;
Fig. 16 is a top-down diagram illustrating a groove in a top surface of the second vehicle; and
Fig. 17 is a top-down conceptual diagram of the bracket engaged with a second vehicle and third vehicle.

### DETAILED DESCRIPTION

In overview, the disclosure relates to a connection device that is configured to connect a second vehicle to a first vehicle in an automated storage and retrieval system. The connection device includes a bracket configured to move in the Z-direction to connect the second vehicle to the first vehicle, such that the first vehicle is then capable of moving the second vehicle forward and backward in the X-direction and the Y-direction. In this way, more precise and careful control of the movement of the second vehicle with the first vehicle is achieved, compared to simply using the first vehicle to push the second vehicle in one direction.

### Automated storage and retrieval system overview

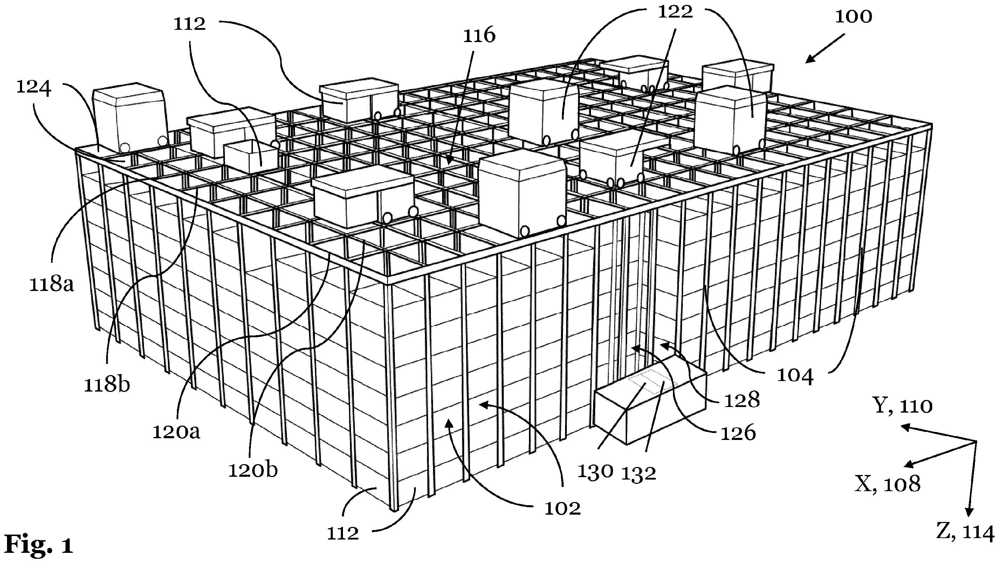

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles (also referred to as container-handling robotic vehicles, interchangeably), or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

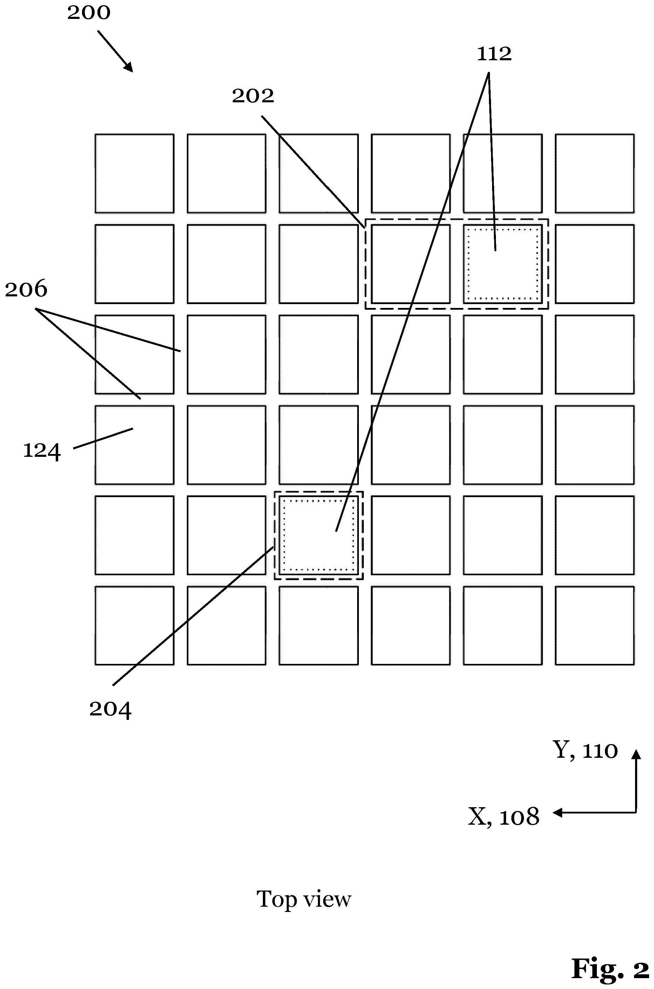

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

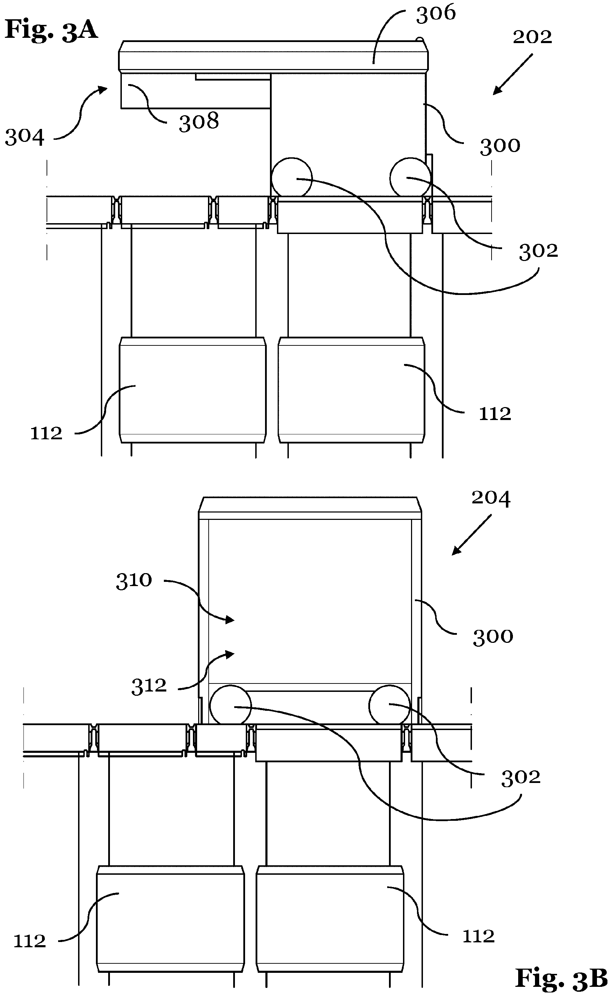

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

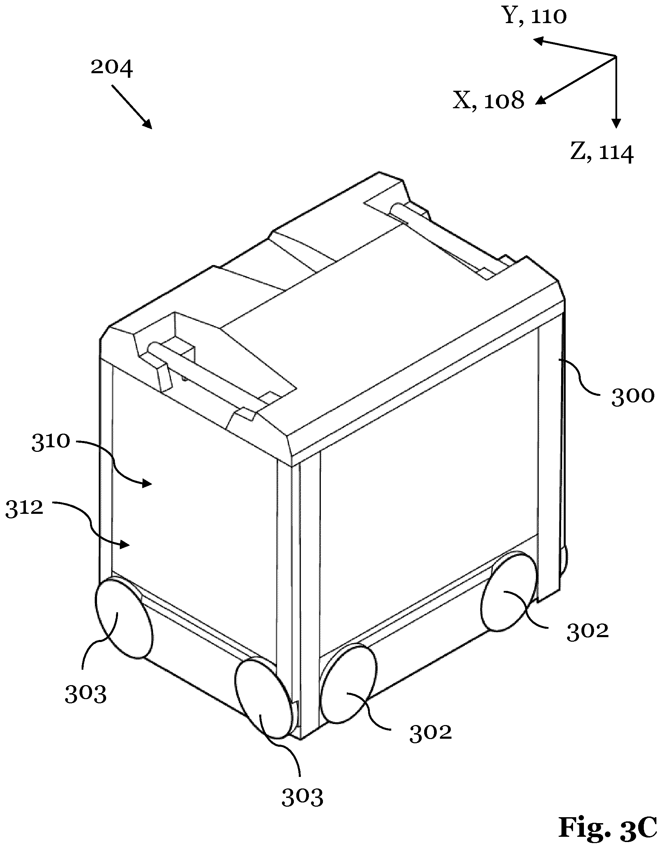

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

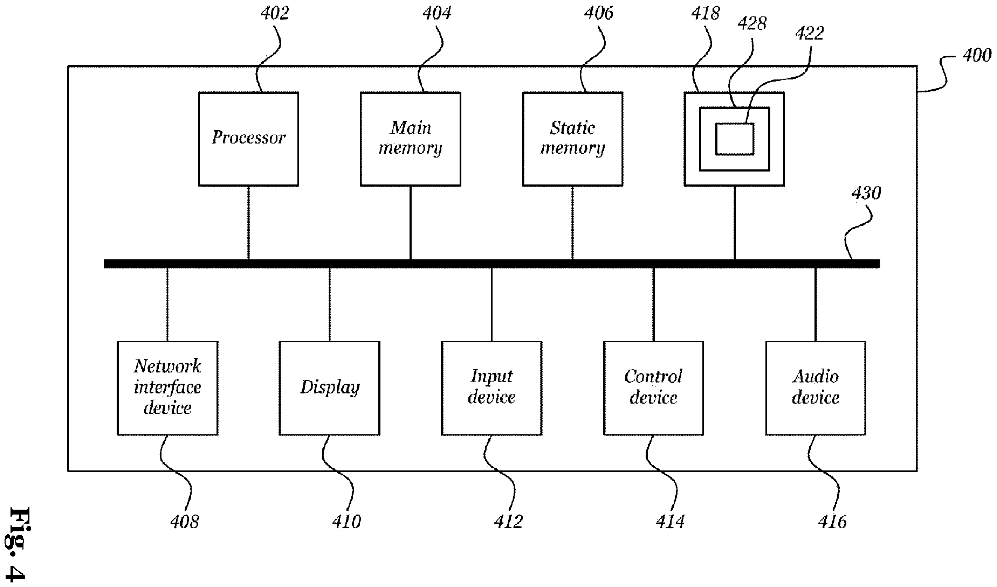

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which maybe marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Connection Device

A connection a device can be configured to connect a second vehicle to a first vehicle in the automated storage and retrieval system. The second vehicle and the first vehicle can be configured to traverse the storage and retrieval system. The connection device can comprise a support member attachable to the first vehicle. The connection device can further comprise a bracket that can be engaged with the support member to have substantially free movement in a Z-direction along the support member. The bracket can be configured to move in the Z-direction to connect the second vehicle to the first vehicle when the second vehicle is adjacent to the first vehicle. In this way, the first vehicle can be capable of moving the second vehicle in the X-direction and the Y-direction. The X-direction and Y-direction can be perpendicular to one another and are main directions of vehicle travel in the automated storage and retrieval system. The Z-direction is perpendicular to the X-direction and the Y-direction. For example, the first vehicle can move the second vehicle forward and backward in the X-direction, and forward and backward in the Y-direction. Such movement can also be considered as forward, backward and sideways, or positively and negatively in the X-direction and positively and negatively in the Y-direction

In this way, the first vehicle can push and pull the second vehicle in both the X-direction and the Y-direction. This provides a high level control of the movement of the second vehicle as the first vehicle can control the movement of the second vehicle in four directions, rather than only one direction afforded by simply pushing the second vehicle. Furthermore, when the first vehicle slows from a higher speed to a lower speed, or to be stationary, the second vehicle can remain engaged to the first vehicle. This inhibits the second vehicle from moving away from the first vehicle, through the conserved momentum of the second vehicle, as the first vehicle slows down. As such, the first vehicle can also have control over the movement of the second vehicle while the first vehicle decelerates, unlike if the first vehicle were simply pushing the second vehicle.

The bracket can comprise a first slot. The first slot can be configured to receive and engage a first lip of the second vehicle. In this way, the first vehicle can be connected to the second vehicle to move the second vehicle forward and backward in the X-direction.

The bracket can further comprise a second slot. The second slot can be configured to receive and engage a second lip of the second vehicle. In this way, the first vehicle can be connected to the second vehicle to move the second vehicle forward and backward in the Y-direction.

The bracket can simultaneously engage the first slot with the first lip of the second vehicle, and the second slot with the second lip of the second vehicle.

The first slot can be defined between a first abutment surface of the bracket and a second abutment surface of the bracket. The first abutment surface can be configured to form a close fit with a first side of the first lip. The second abutment surface can be configured to form a close fit with a second side of the first lip. The second side of the first lip can be opposite to the first side of the first lip.

The second slot can be defined between a third abutment surface of the bracket and a fourth abutment surface of the bracket. The third abutment surface can be configured to form a close fit with a first side of the second lip. The fourth abutment surface can be configured to form a close fit with a second side of the second lip. The second side of the second lip can be opposite to the first side of the second lip.

The first slot can be substantially perpendicular to the second slot. The first abutment surface can be substantially parallel to the second abutment surface. The third abutment surface can be substantially parallel to the fourth abutment surface.

The first lip can be substantially perpendicular to the second lip. The first side of the first lip can be substantially parallel to the second side of the first lip. The first side of the second lip can be substantially parallel to the second side of the second lip.

The first slot can have a width similar to a width of the first lip to allow a close fit of the first lip in the first slot.

The second slot can have a width similar to a width of the second lip to allow a close fit of the second lip in the second slot.

The bracket can comprise a base. A wall can extend perpendicular from a first surface of the base. The bracket can also comprise a first post adjacent to and displaced from both the wall and the first surface of the base.

The first abutment surface can comprise a first surface of the wall facing the first post.

The second abutment surface can comprise a first surface of the first post facing the wall.

The third abutment surface can comprise the first surface of the base facing the first post.

The fourth abutment surface can comprise a second surface of the first post facing the base.

The bracket can further comprise a connecting member. The connecting member can connect the first post with the wall and the base. The first post can extend from the connecting member. The wall can extend from both the connecting member and the base.

The connecting member can be a panel that extends outwardly from an upper end of the bracket. This can be a top panel. The connecting member can be configured to engage a surface of the second vehicle as the bracket moves in the Z-direction toward the second vehicle.

The bracket can be configured to engage a recessed groove. The recessed groove can be in an upper surface of the second vehicle. The recessed groove can be arranged proximal to an end of the upper surface.

The first lip can defined between a first sidewall of the recessed groove and a first edge of the upper surface.

The second lip can be defined between a second sidewall of the recessed groove and a second edge of the upper surface.

The second sidewall can be perpendicular to the first sidewall. The second edge can be perpendicular to the first edge.

In an alternative, the first and/or the second lip could be defined as one or more projections from the upper surface of the second vehicle.

The bracket can be configured to connect to a plurality of vehicles. The plurality of vehicles can comprise the second vehicle and a third vehicle.

In this way, the first vehicle can recover two malfunctioned vehicles (i.e., the second vehicle and the third vehicle) at the same time. This can reduce system downtime and improve overall efficiency by saving time in removing the malfunctioned vehicles from system and/or bringing them in for repair.

The bracket can comprise a third slot. The third slot can be configured to receive and engage a first lip of the third vehicle. In this way, the first vehicle can be connected to the third vehicle to move the third vehicle forward and backward in the X-direction.

The bracket can comprise a fourth slot. The fourth slot can be configured to receive and engage a second lip of the third vehicle. In this way, the first vehicle can be connected to the third vehicle to move the third vehicle forward and backward in the Y-direction.

The third slot can be defined between a fifth abutment surface of the bracket and a sixth abutment surface of the bracket.

The fifth abutment surface can be configured to form a close fit with a first side of the first lip of the third vehicle.

The second abutment surface can be configured to form a close fit with a second side of the first lip of the third vehicle.

The second side of the first lip of the third vehicle can be an opposite side to the first side of the first lip of the third vehicle.

The fourth slot can be defined between a seventh abutment surface of the bracket and an eighth abutment surface of the bracket.

The seventh abutment surface can be configured to form a close fit with a first side of the second lip of the third vehicle.

The eighth abutment surface can be configured to form a close fit with a second side of the second lip of the third vehicle.

The second side of the second lip of the third vehicle can be opposite to the first side of the second lip of the third vehicle.

The wall of the bracket can extend from a position on the base that bisects the first surface of the base.

The bracket can further comprise a second post adjacent to and displaced from both the wall and the first surface of the base. The second post can be on an opposite side of the wall to the first post.

The fifth abutment surface can comprise a second surface of the wall. This can be opposite to the first surface, and facing the second post.

The sixth abutment surface can comprise a first surface of the second post facing the wall.

The seventh abutment surface can comprise the first surface of the base facing the second post.

The eighth abutment surface can comprise a second surface of the second post facing the base.

The third slot can be substantially perpendicular to the fourth slot. The fifth abutment surface can be substantially parallel to the sixth abutment surface. The seventh abutment surface can be substantially parallel to the eighth abutment surface.

The third slot can be substantially parallel to the first slot.

The fourth slot can be substantially in line with, or parallel to, the second slot.

The first abutment surface can be substantially parallel to the fifth abutment surface. The first abutment surface can be an opposite side of the wall to the fifth abutment surface.

The third abutment surface and the seventh abutment surface can both be on the same face of the base, but with the wall extending from the base between the third abutment surface and the seventh abutment surface.

The fourth abutment surface can be substantially in line with, or parallel to, the eighth abutment surface.

The sixth second abutment surface can be substantially parallel with the second abutment surface.

The first post can be substantially cuboid in shape.

The second post can be substantially cuboid in shape.

The bracket can have a line of symmetry through the centre of the wall in the direction of extension of the wall from the base. The second post can mirror the first post. The first slot can mirror the third slot. The second slot can mirror the fourth slot. The first abutment surface can mirror the fifth abutment surface. The second abutment surface can mirror the sixth abutment surface. The third abutment surface can mirror the seventh abutment surface. The fourth abutment surface can mirror the eighth abutment surface.

The first lip of the third vehicle can be substantially perpendicular to the second lip of the third vehicle. The first side of the first lip of the third vehicle can be substantially parallel to the second side of the first lip of the third vehicle. The first side of the second lip of the third vehicle can be substantially parallel to the second side of the second lip of the third vehicle.

The third slot can have a width similar to a width of the first lip of the third vehicle to allow a close fit of the first lip of the third vehicle in the third slot.

The fourth slot can have a width similar to a width of the second lip of the third vehicle to allow a close fit of the second lip of the third vehicle in the fourth slot.

The bracket can be configured to be connected to the second vehicle using one or more locking pins, one or more brackets, and/or one or more screws. The bracket can be configured such that these one or more locking pins, one or more brackets, and/or one or more screws pass through openings in the bracket and are received in corresponding openings in the second vehicle to connect the bracket to the second vehicle.

In an alternative to the slot and lip arrangement for engaging the bracket to the second vehicle, one or more locking pins can be used to attach the bracket to the second vehicle. In such an alternative, the first post and second post need not be present. For example, one or more locking pins can pass through one or more first orifices in the bracket and be received in one or more second orifices in the second vehicle. In an example, a first locking pin can be used to attach the bracket to the second vehicle to inhibit movement between the bracket and the second vehicle in the X-direction; a second locking pin can be used to attach the bracket to the second vehicle to inhibit movement between the bracket and the second vehicle in the Y-direction. The first locking pin can be inserted into an orifice in a first sidewall of the second vehicle, and the second locking pin can be inserted into an orifice in a second sidewall of the second vehicle perpendicular to the first sidewall. The bracket can comprise a panel that moves in the Z-direction to fit against a sidewall of the second vehicle, with the orifices in said panel. The bracket can comprise two perpendicular and connected panels facing in the X-direction and Y-direction, and that move in the Z-direction to fit against two perpendicular sidewalls of the second vehicle, with the orifices in said panels.

In a related alternative, the one or more orifices in the second vehicle can be arranged in a top surface of the second vehicle, and one or more locking pins can be used to attach the bracket to the top surface of the second vehicle by passing the one or more locking pins through one or more orifices in the bracket that correspond to the one or more orifices in the top surface of the second vehicle. The bracket can comprise a portion that moves in the Z-direction to be positioned against the top surface of the second vehicle, with the orifice in said portion.

In another alternative to the slot and lip arrangement for engaging the bracket to the second vehicle, one or more bolts or screws can be used to attach the bracket to the second vehicle. In such an alternative, the first post and second post need not be present. For example, one or more bolts or screws can pass through one or more first orifices in the bracket and be received in one or more second orifices in the second vehicle that can be arranged to receive the thread of the bolt or screw. In an example, a first bolt or screw can be used to attach the bracket to the second vehicle in the X-direction; a second bolt or screw can be used to attach the bracket to the second vehicle in the Y-direction. The first bolt or screw (or first bolts or first screws) can be inserted into an orifice (or orifices) in a first sidewall of the second vehicle. The second bolt or screw (or second bolts or second screws) can be inserted into an orifice in a second sidewall of the second vehicle perpendicular to the first sidewall. The bracket can comprise a panel that moves in the Z-direction to fit against a sidewall of the second vehicle, with the orifices in said panel. The bracket can comprise two perpendicular and connected panels facing in the X-direction and the Y-direction, and that move in the Z-direction, to fit against two perpendicular sidewalls of the second vehicle, with the orifices in said panels.

In a related alternative, the one or more orifices in the second vehicle can be arranged in a top surface of the second vehicle, and one or more bolts or screws can be used to attach the bracket to the top surface of the second vehicle by passing the one or more bolts or screws through one or more orifices in the bracket that correspond to the one or more orifices in the top surface of the second vehicle. The bracket can comprise a portion that moves in the Z-direction to be positioned against the top surface of the second vehicle, with the orifice(s) in said portion.

In a further related alternative, the aforementioned alternatives using one or more locking pins, or one or more bolts and screws, can be used in combination with the slot and lip arrangement for engaging the bracket to the second vehicle to further secure the connection between the two.

The support member can comprise one or more projecting members. The projecting members can be configured to be attached to the first vehicle.

The projecting members can be formed as rods that project from an area on the first vehicle.

The projecting members can project substantially vertically, in the Z-direction.

Movement of the bracket in the X-direction and the Y-direction can be inhibited by the support member.

The bracket can comprise one or more receiving portions corresponding to and configured to receive the one or more projecting members. In this way, the bracket can be configured to freely move in the Z-direction guided along the one or more projecting members. The bracket can be inhibited from moving in the X-direction and the Y-direction by an interaction between the projecting members and the receiving portions.

The one or more receiving portions can be arranged in a base of the bracket; for example, the aforementioned base.

The one or more receiving portions can be dimensioned so that the projecting member(s) pass therethrough with a close fit. The receiving portions can be through-holes.

The support member can comprise two projecting members, and the bracket can comprise two corresponding receiving portions.

Using more than one (e.g., two) projecting members can inhibit twisting or rotating of the bracket, thereby providing a secure connection to the second vehicle.

Alternatively, one support member / projecting member can be use with a cross-section that stops twisting, such as a non-circular cross-section when viewed along an axial direction of the support member / projecting member (e.g., a square or rectangle cross section). This can bring about a similar effect in inhibiting twisting or rotating of the bracket, thereby providing a secure connection to the second vehicle.

The support member / projecting member(s) can have a proximal end portion that is attached to the first vehicle. The support member / projecting member(s) can have a distal end portion that is at an opposite end to the proximal end portion.

The distal end portion can be a free end.

The proximal end portion of the support member / projecting member(s) can be attached to a base plate of the connection device. The base plate can be attached to the first vehicle; for example on a frame of the first vehicle. For example, the base plate could be screwed or bolted to the first vehicle.

Alternatively, the proximal end portion of the support member / projecting member(s) can be attached directly to the first vehicle; for example on a frame of the first vehicle.

The support member / projecting member(s) can have a stopper arranged at the distal end portion. The stopper can be sized to be larger than the support member / projecting member, and larger than the receiving portion in the bracket, so that it prevents the bracket from sliding beyond the distal end portion of the support member / projecting member(s). For example, if the support member / projecting member(s) are circular in cross-section, the stopper can have a larger diameter than the diameter of the circular cross-section of the support member / projecting member(s).

The connection device can be attached to a side portion of the first vehicle. In this way, when the second vehicle is adjacent to (e.g., alongside) the first vehicle, the connection device can be used to connect the first vehicle to the second vehicle.

The bracket can be formed from a plastic or plastic-based composite material. In this way, damage to the second vehicle during interaction with the bracket (such as by scratching) is reduced compared to using metal for example.

The second vehicle can be a container-handling robotic vehicle. The container-handling robotic vehicle can be configured to traverse the automated storage and retrieval system to store and retrieve containers.

The second vehicle can be a container-handling robotic vehicle such as those described with reference to, or similar to those of, or consistent with those of Fig. 3A, Fig. 3B. and Fig. 3C. It is noted that, for simplicity, the container-handling robotic vehicle Fig. 3C does not show the aforementioned first lip and second lip. However, the skilled person would readily understand that such lips as described can readily be integrated into such a vehicle.

The first vehicle can be a service vehicle configured for providing servicing and repair operations in the automated storage and retrieval system.

The service vehicle can be controlled to traverse the grid in the X-direction and the Y-direction in a similar manner to that described for the container-handling robotic vehicles of Fig. 3A, Fig. 3B. and Fig. 3C. For example, this can involve wheels of the service vehicle permitting movement of the service vehicle in one of the X-direction and Y-direction, and an additional set of wheels permitting movement in the other of the X-direction and the Y-direction, in both cases along the respective rails or tracks. One or both sets of wheels can be raised or lowered to permit selective engagement of the rails for movement in the desired direction. Movement of the service vehicle can be controlled by the human operator. Alternatively, movement of the service vehicle can be controlled by instructions sent from a main controller of the automated storage and retrieval system.

The movement of the bracket in the Z-direction can be brought about by a human operator physically lifting and lowering the bracket along the support member. The human operator can be a passenger and/or operator of the service vehicle, for example.

In some examples, the bracket can freely move in the Z-direction along the support member. As discussed with reference to Fig. 3C, the container-handling robotic vehicles can switch between moving in the X-direction and the Y-direction by selectively raising or lowering the appropriate set of wheels. In some cases, this can lead to some movement of the container-handling robotic vehicle in the Z-direction, for example lowering one set of the wheels can push the container-handling robotic vehicle upward. The free movement of the bracket in the Z-direction allows the bracket to move with the container-handling robotic vehicle as it moves up and down in this way. This means that the support vehicle does not need to raise/lower a wheel set in temporal alignment with the container-handling robotic vehicle in order to maintain the connection to the container-handling robotic vehicle because via the bracket, because the bracket can move with the Z-displacement of the container-handling robotic vehicle to maintain the connection. Moreover, if the container-handling robotic vehicle has malfunctioned and can no longer automatically raise/lower a wheel set to switch between X-direction and Y-direction movement, the human operator may need to manually control this. Because the bracket moves freely in the Z-direction, the human operator can first raise/lower a wheel set to switch between X-direction and Y-direction movement in one vehicle, and then raise/lower a wheel set to switch between X-direction and Y-direction movement for the other vehicle, without losing the connection between the bracket and the container-handling robotic vehicle. That is, the two vehicles do not need to raise/lower a wheel set to switch between X-direction and Y-direction movement at the same time for the connection between the bracket and the container-handling robotic vehicle to be maintained.

Alternatively, movement of the bracket in the Z-direction can be brought about by a motor, such as a solenoid, that raises and lowers the bracket.

In an alternative to the first vehicle being a service vehicle, the first vehicle could instead be a container-handling robotic vehicle with the connection device attached thereto. In related examples, the movement of the bracket in the Z-direction can be brought about by a motor, such as a solenoid, that raises and lowers the bracket, particularly if a human operator is not present.

The third vehicle can be a further container-handling robotic vehicle. Alternatively, the third vehicle could be any other type of vehicle in the automated storage and retrieval system, such as a further service vehicle.

In some examples, two connection devices could be attached to the first vehicle. For example, a first connection device could be attached to a first side of the first vehicle, and a second connection device could be attached to a second side of the first vehicle (the second side can be an opposite end or perpendicular side to the first side). In this way, the first vehicle can engage other vehicles on more than one side. In some cases, connection devices with aforementioned brackets that can connect to both a second vehicle and a third vehicle can be attached to two sides of the first vehicle. In this way, two connection devices can be used to engage four vehicles and connect these four vehicles to the first vehicle. In further examples, more than two connection devices can be attached to the first vehicle (e.g., on each side of the first vehicle), and each of these connection devices can be configured to connect to one or two vehicles, so that the first vehicle can move even more vehicles.

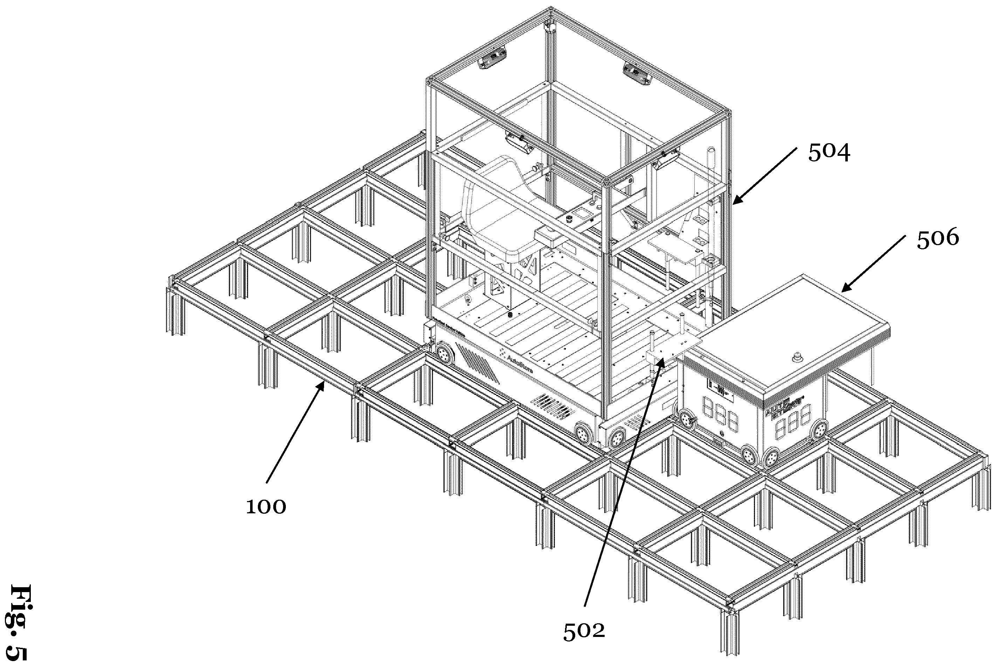

Turning to Fig. 5 to Fig. 17, a specific implementation of the connection device is presented.

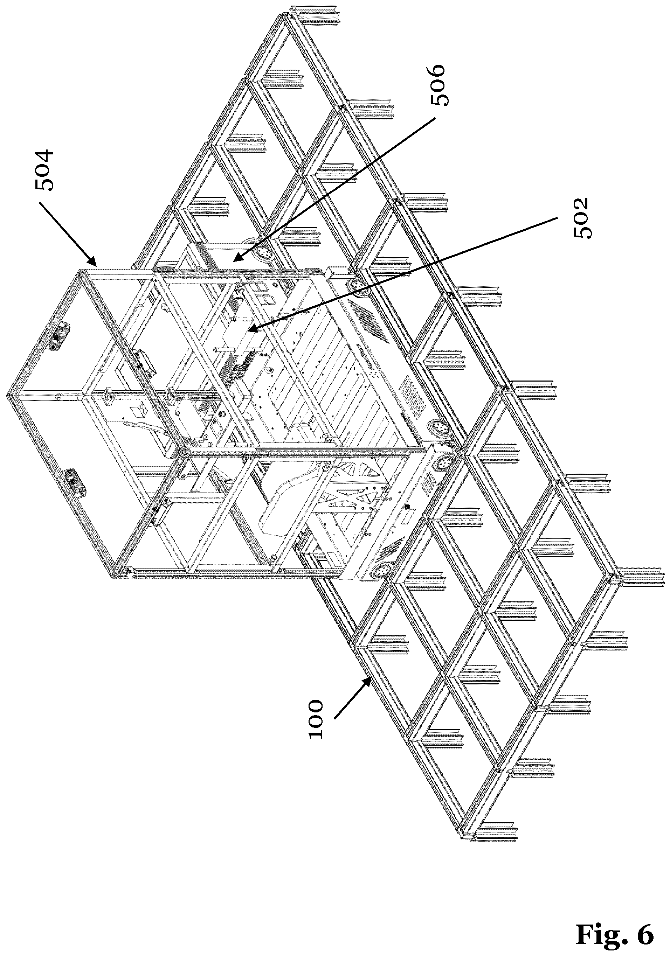

Fig. 5 is a first perspective view of the first vehicle 504 connected to the second vehicle 506 by the connection device 502. Fig. 6 is a second perspective view of the first vehicle 504 connected to the second vehicle 506 by the connection device 502. Both the first vehicle 504 and the second vehicle 506 are positioned on the grid 100.

The first vehicle 504 is a service vehicle. The service vehicle 504 is configured for providing servicing and repair operations in the automated storage and retrieval system, such as recovering and repairing malfunctioned container-handling robotic vehicles 506.

The second vehicle 506 is a container-handling robotic vehicle. In the illustrated examples, the type of container-handling robotic vehicle shown is that of Fig. 3A. However, it will be readily understood that the teaching can also be applied to that of Fig. 3B, or any other suitable type of grid-traversing vehicle.

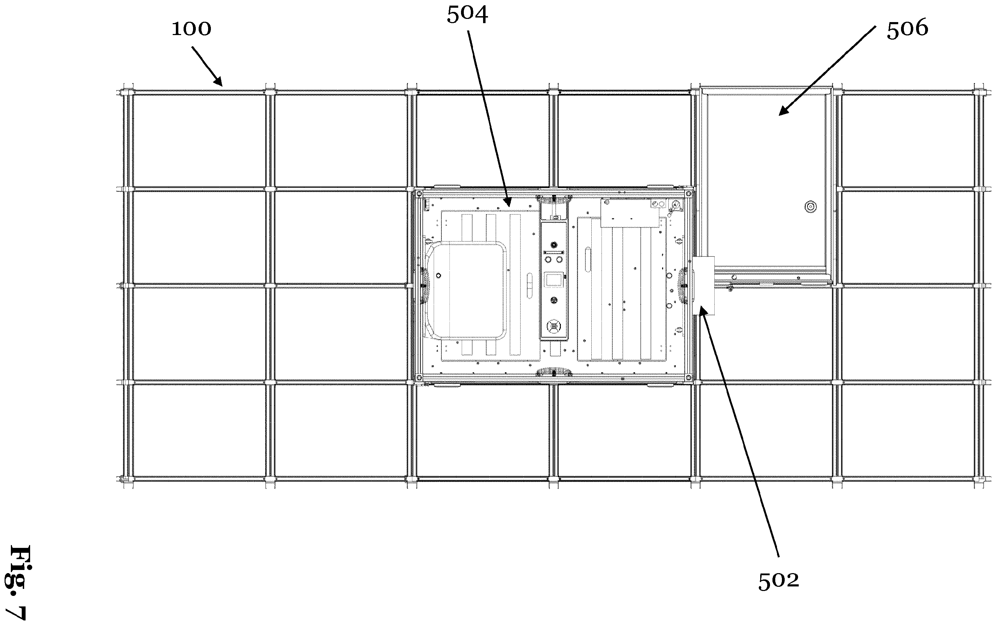

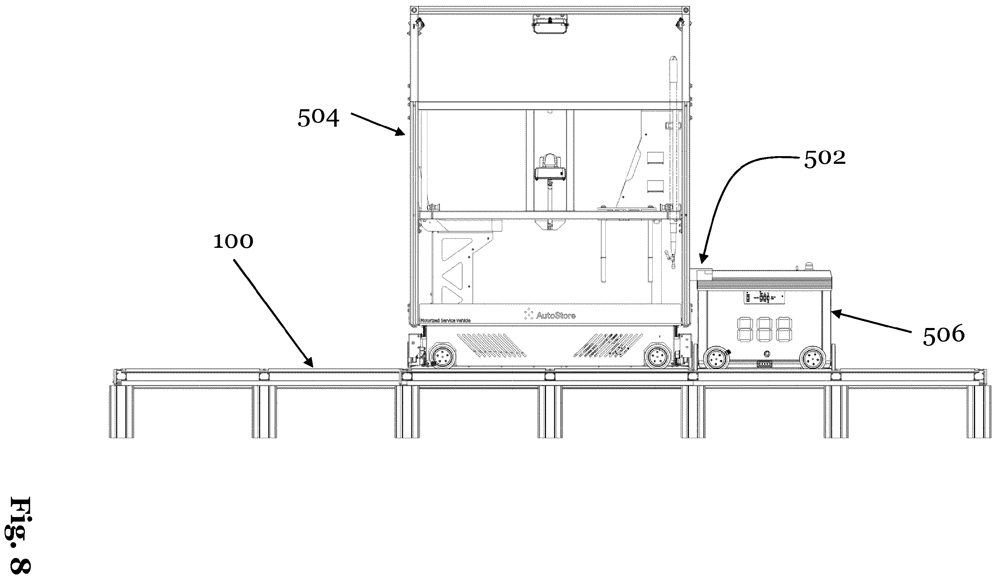

Fig. 7 is a top-down view of the service vehicle 504 connected to the container-handling robotic vehicle 506 by the connection device 502, corresponding to the perspective views of Fig. 5 and Fig. 6. Fig. 8 is a side view, corresponding to Fig. 5, Fig. 6 and Fig. 7, of the service vehicle 504 connected to the container-handling robotic vehicle 506 by the connection device 502.

The service vehicle 504 is operated by a human operator who rides in and controls the service vehicle 504 to navigate it as it traverses the grid 100. The service vehicle 504 travels in the X-direction and the Y-direction on the grid using two sets of wheels in a similar manner as to that described with reference to Fig. 3C for the container-handling robotic vehicle 506 (for brevity this detail is not repeated here).

The connection device 502 is attached to a side portion of the service vehicle 504 and is configured to engage a top surface 562 of the container-handling robotic vehicle 506. The operator is able to position the service vehicle 504 to be adjacent to the container-handling robotic vehicle 506. The operator then engages the container-handling robotic vehicle 506 with the connection device 502. In this way, the service vehicle 504 can push and pull the container-handling robotic vehicle 506 across the grid 100. This is particularly useful in recovering a container-handling robotic vehicle that has malfunctioned and can no longer be remotely controlled to traverse the grid 100.

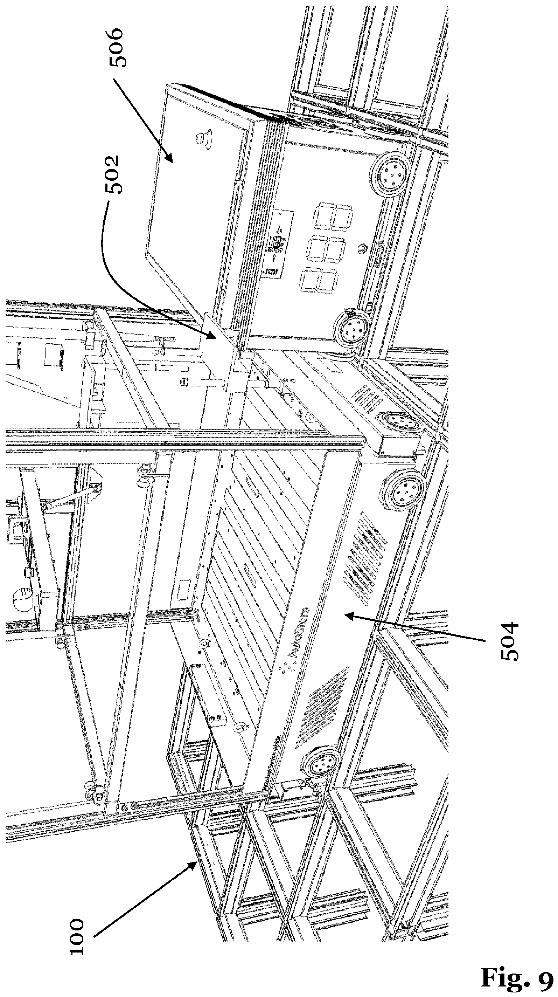

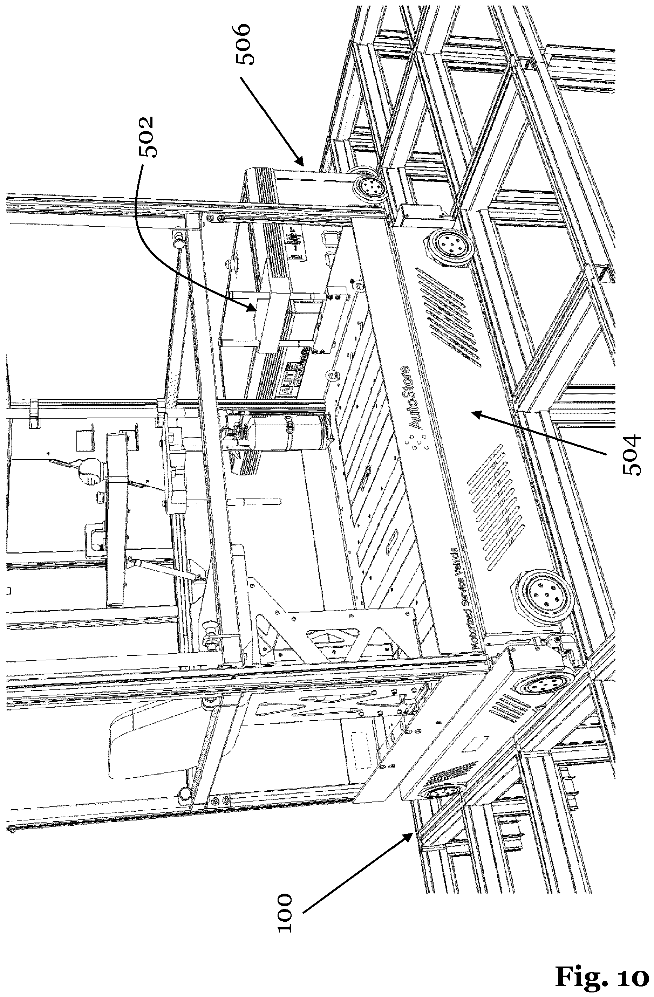

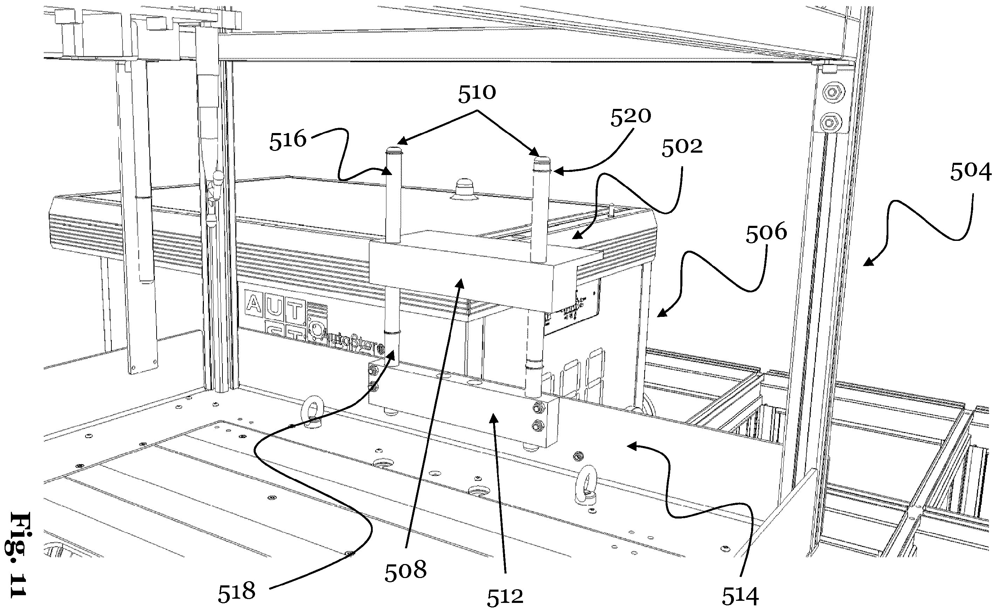

Fig. 9 is a first enhanced perspective view of the service vehicle 504 connected to the container-handling robotic vehicle 506 by the connection device 502, and Fig. 10 is a second enhanced perspective view of the service vehicle 504 connected to the container-handling robotic vehicle 506 by the connection device 502. Fig. 11 is a further enhanced perspective view of the service vehicle 504 connected to the container-handling robotic vehicle 506 by the connection device 502, showing more detail of the connection device 502.

The connection device 502 includes a support member 510 that is attachable to the service vehicle 504. The connection device 502 also includes a bracket 508 that is engaged with the support member 510 to have substantially free movement in the Z-direction along the support member 510, and with movement inhibited in an X-direction and a Y-direction by the support member 510.

The X-direction and Y-direction are perpendicular to one another and correspond to the main directions of vehicle travel across the grid 100 in the automated storage and retrieval system, as described with reference to Fig. 1. The Z-direction is perpendicular to the X-direction and the Y-direction (i.e., perpendicular to the X-Y plane of the grid).

The bracket 508 is configured to move in the Z-direction to connect the container-handling robotic vehicle 506 to the service vehicle 504 when the container-handling robotic vehicle 506 is adjacent to the service vehicle 504. This allows for the service vehicle 504 to move the container-handling robotic vehicle 506 forward and backward in the X-direction and the Y-direction. In other words, when the support vehicle 504 traverses the gird in the X-direction and the Y-direction, the container-handling robotic vehicle 506 is moved with the service vehicle 504 when it is attached with the connection device 502.

An operator in the service vehicle 504 manually lowers and raises the bracket 508 in the Z-direction to engage and disengage the container-handling robotic vehicle 506 from the service vehicle 504.

The bracket 508 is formed from a plastic or plastic-based composite material to inhibit any damage being caused to the container-handling robotic vehicle 506 during interaction with the bracket 502 (such as by scratching), compared to using metal for example as the bracket material.

The support member 510 is formed as two projecting members 510 that are attached to the service vehicle 504. The projecting members 510 are each substantially rod-shaped with a circular cross-section in an axial direction along the projecting members 510. The projecting members 510 are arranged to project substantially vertically in the Z-direction, parallel to one another. The projecting members 510 are each attached to a base plate 512 of the connection device 502 at a proximal end portion 518 of the projecting members 510. The projecting members 510 each extend to a distal end portion 516 away from the proximal end portion 518. The distal end portion 516 of each projecting member 510 is a free end. The base plate 512 is attached through bolt connections to a side panel 514 of the service vehicle 504. The base plate 512 is attached to an inward-facing side of the side panel 514 that faces inward to the service vehicle 504.

The projecting members 510 each have a stopper 520 arranged at the distal end portion 516. The stopper 520 is sized to be wider than the projecting member 510, and wider than a receiving portion in the bracket through which the projecting member 510 passes for the bracket 508 to slide in the Z-direction along the projecting member 510. This is to prevent the bracket 508 from sliding beyond the distal end portion 516 of the projecting member 510. Each stopper 520 has a larger diameter than the diameter of the circular cross-section of the projecting members 510.

Using two projecting members 510 inhibits movement of the bracket 508 in the X-direction and the Y-direction, thereby inhibiting twisting or rotating of the bracket 508. In this way, the bracket 508 can be easily aligned with the container-handling robotic vehicle 506 for connection, and contributes to providing a rigid connection between the service vehicle 504 the container-handling robotic vehicle 506.

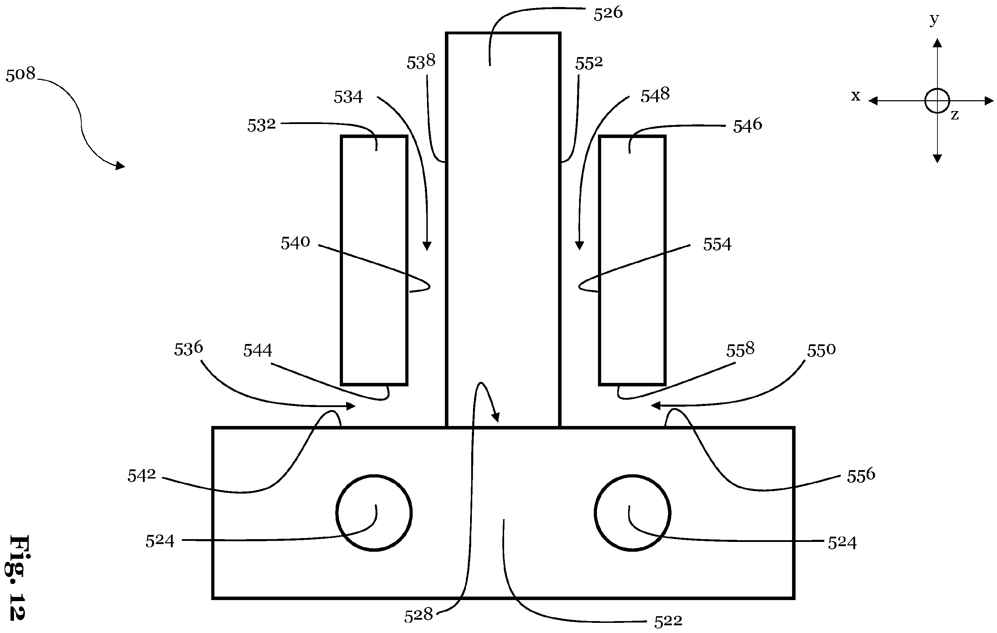

Turning to Fig. 12, the bracket 508 is discussed in more detail. Fig. 12 is a cross-sectional diagram of the bracket 508. The cross-section is a view of the bracket 508 along the Z-direction, and sliced in the X-Y plane through substantially the middle of the bracket 508.

The bracket 508 has base portion 522 (or base). The base portion 522 is cuboid in shape.

There are receiving portions 524 in the base portion 522. The receiving portions 524 are through-holes in the base portion 522. There are two through-holes 524 in the base portion 522, positioned to each receive one of the projecting members 510 of the support member. The projecting members 510 pass through the through-holes 524 such that the base portion 522 slides along the projecting members 510 in the Z-direction. The projecting members 510 and through-holes 524 have a similar cross-sectional shape and size to provide a close fit between the projecting members 510 and through-holes 524. This allows the bracket 508 to freely slide up and down the projecting members 510 in a supported manner.

A wall 526 extends outwardly from a face 528 of the base portion 522 in a direction perpendicular to the direction of the through-holes 524 through the base portion 522 (i.e., the X-direction or Y-direction). The wall 526 is positioned substantially centrally to the face 528 of the base portion 522 from which it extends, dividing said face 528 into two portions. The wall 526 has a height in the Z-direction that is substantially the same as the thickness of the base portion 522 in the Z-direction. The wall 526 has a cuboid shape.

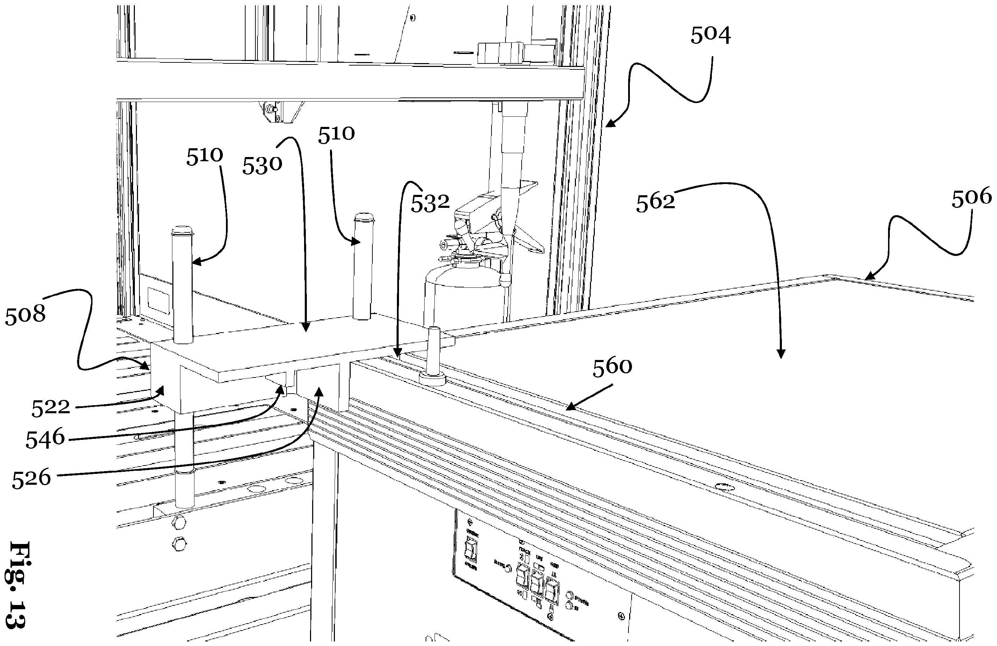

The bracket 508 also has a top panel 530 or connecting member (not shown in Fig. 12, but seen in e.g. Fig. 13, Fig. 14 and Fig. 15). The top panel 530 extends from the base portion 522 in the same direction as the wall 526. The top panel 530 is in a plane perpendicular to the plane of the wall 526. The top panel 530 extends from the base portion 522 and terminates at the same point as the end of the wall 526. The top panel 530 has a width in the that is equal to the width of the base portion 522.

A first side of the wall 526 is connected to the base portion 522 of the bracket 508. A second side of the wall 526, perpendicular to the first side of wall 526, is connected to the top panel 530 of the bracket 508.

A first post 532 extends downward from the top panel 530 in the Z-direction (i.e., in the same direction as the wall 526 extends from the top panel 530). The first post 532 is cuboid in shape. The first post 532 is not directly connected to the wall 526 or the base portion 522. The top panel 530 is a connecting member that connects the base portion 522, the wall 526 and the first post 532 with one-another.

Because the first post 532 is not directly connected to either the base portion 522 or the wall 526, there is a gap between the first post 532 and the wall 526, and another gap between the first post 532 and the base portion 522. These gaps respectively create a first slot 534 and a second slot 536.

The first slot 534 is the region between a surface of the first post 532 that faces the wall 526 and the wall 526 itself. The second slot 536 is the region between a surface of the first post 532 that faces the base portion 522 and the base portion 522 itself.

The first slot 534 is defined between a first abutment surface 538 that is a surface of the wall 526 that faces the first post 532 and a second abutment surface 540 that is a surface of the first post 532 that faces the wall 526.

The second slot 536 is defined between a third abutment surface 542 that is a surface of the base portion 522 that faces the first post 532 and a fourth abutment surface 544 that is a surface of the first post 532 that faces the base portion 522.

The bracket 508 has a line of symmetry through the centre of the wall 526 in the direction of extension of the wall 526 from the base portion 522. A second post 546 that mirrors the first post 532 is on the opposite side of the wall 526. The second post 546 extends from the top panel 530 in the Z-direction (in the same manner as the first post 532). The second post 546 is cuboid in shape. The second post 546 is not directly connected to the wall 526 or the base portion 522. The top panel 530 connects the base portion 522, the wall 526 and the second post 546 (as well as the first post 532) with one-another.

Because the second post 546 is not directly connected to either the base portion 522 or the wall 526, there is a gap between the second post 546 and the wall 526, and another gap between the second post 546 and the base portion 522. These gaps respectively create a third slot 548 and a fourth slot 550.

The third slot 548 is the region between a surface of the second post 546 that faces the wall 526 and the wall 526 itself. The fourth slot 550 is the region between a surface of the second post 546 that faces the base portion 522 and the base portion 522 itself.

The third slot 548 is defined between a fifth abutment surface 552 that is a surface of the wall 526 that faces the second post 546 and a sixth abutment surface 554 that is a surface of the second post 546 that faces the wall 526.

The fourth slot 550 is defined between a seventh abutment surface 556 that is a surface of the base portion 522 that faces the second post 546 and an eighth abutment surface 558 that is a surface of the second post 546 that faces the base portion 522.

The first slot 534 mirrors the third slot 548 in the aforementioned line of symmetry. The second slot 536 mirrors the fourth slot 550. The first abutment surface 538 mirrors the fifth abutment surface 552. The second abutment surface 540 mirrors the sixth abutment surface 554. The third abutment surface 542 mirrors the seventh abutment surface 556. The fourth abutment surface 544 mirrors the eighth abutment surface 558.

Turning to Fig. 13, Fig. 14 and Fig. 15, the engagement and disengagement between the bracket 508 and the container-handling robotic vehicle 506 is considered in more detail.

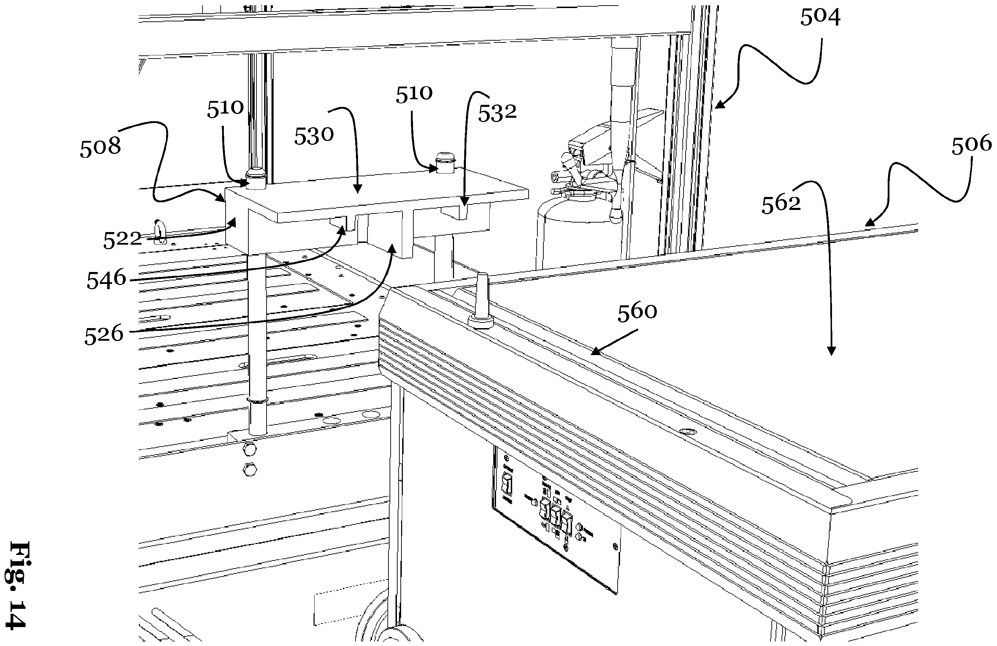

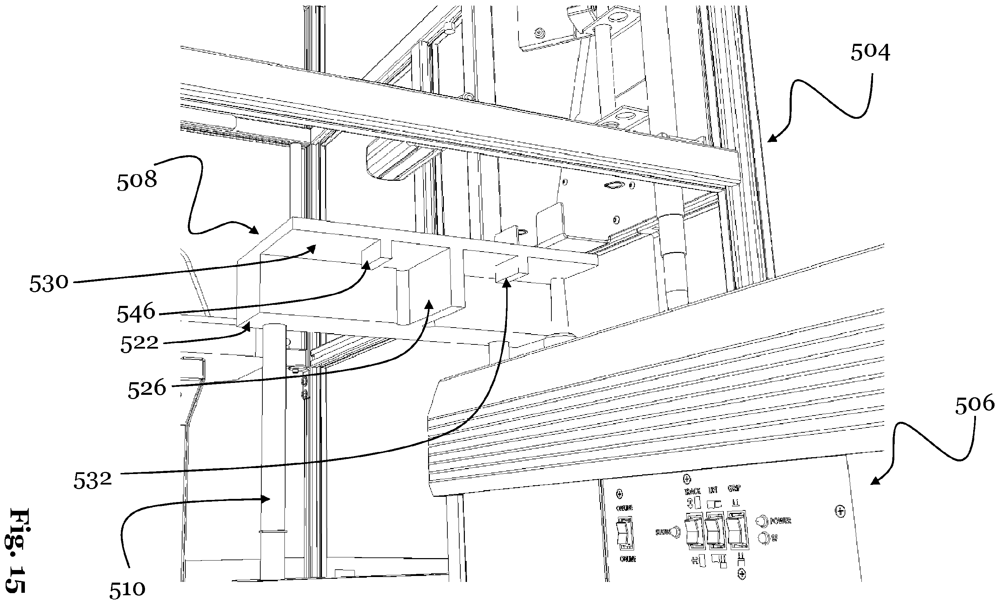

Fig. 13 is a perspective view of the bracket 508 engaged with the container-handling robotic vehicle 506. Fig. 14 is a first perspective view of the bracket 508 disengaged from the container-handling robotic vehicle 506. Fig. 15 is a second perspective view of the bracket 508 disengaged from the container-handling robotic vehicle 506.

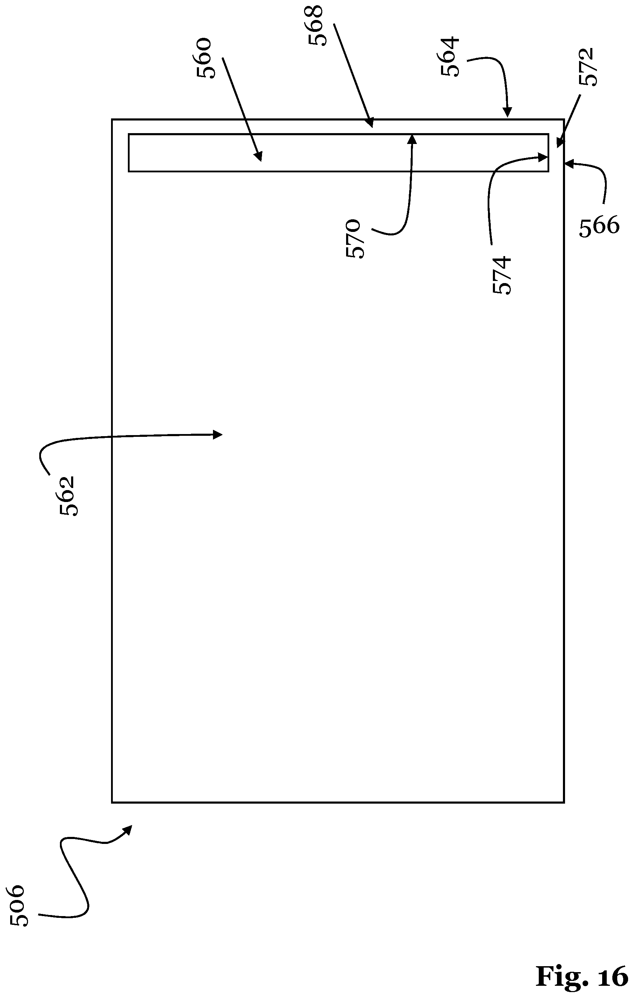

The container-handling robotic vehicle 506 has a recessed portion or groove 560 along one end of the top surface 562 of the vehicle 506. This is illustrated in Fig. 16, which shows a top-down view of the container-handling robotic vehicle 506 and the groove in the upper surface of said vehicle. The groove 560 runs parallel to, and is displaced inwardly from, from a first edge 564 of the top surface 562. In the illustrated example, this first edge 564 is at an opposite end of the vehicle to the end at which the lifting device is arranged. However, it will be readily understood that the groove 560 can run parallel to and be displaced inwardly from any edge of the top surface 562.

The groove 560 has length that extends along the first edge 564 of the top surface 562, defining a first lip 568. The first lip 568 is defined in the top surface 562 of the container-handling robotic vehicle 506 between the first edge 563 of the top surface 562 along which the groove 560 extends, and a first inward facing sidewall 570 of the groove 560. The first inward facing sidewall 570 of the groove 560 is the sidewall that faces in an opposite direction to (i.e. faces away from) the first edge 564 of the top surface 562 along which the groove 560 extends.

The groove 560 has a width that extends inward to the top surface 562, defining a second lip 572. The second lip 572 is defined in the top surface 562 of the container-handling robotic vehicle 506 between a second edge 566 (perpendicular to the first edge 564) of the top surface 562 of the container-handling robotic vehicle 506, and a second inward facing sidewall 574 of the groove 560. The second inward facing sidewall 574 of the groove 572 is perpendicular to the first inward facing sidewall 570 and faces in an opposite direction to (i.e. faces away from) the second edge 566 of the top surface 562.

The first lip 568 extends in a perpendicular direction to the second lip 572.

Fig. 13 shows the bracket 508 engaged with the container-handling robotic vehicle 506.

The bracket 508 is lowered onto the container-handling vehicle 506 by moving the bracket 508 along the projecting members 510, in the Z-direction, toward the top surface 562 of the container-handling robotic vehicle 506. When the bracket 508 is lowered onto the container-handling robotic vehicle 506, and the first post 532 is aligned with the groove 560, the first post 532 is received within the groove 560. The first lip 568 is received in the first slot 534 in the bracket 508 with a close fit. This close fit is provided for the first lip 568 between the first abutment surface 538 and the second abutment surface 540. The first slot 534 is dimensioned with a width that is similar to the width of the first lip 568 (i.e. the distance between the first edge 564 and the first inward facing sidewall 570 of the groove 560) to bring about the close fit. Concurrently, the second lip 572 is received in the second slot 536 in the bracket 508 with a close fit. This close fit is provided for the second lip 572 between the third abutment surface 542 and the fourth abutment 544 surface. The second slot 536 is dimensioned with a width that is similar to the width of the second lip 572 (i.e. the distance between the second edge 566 and the second inward facing sidewall 574 of the groove) to bring about the close fit.

The first lip 568 being received in the first slot 534, between the first abutment surface 538 and the second abutment surface 540, allows for the service vehicle 504 to push and pull the container-handling robotic vehicle 506 in the X-direction. The second lip 572 being received in the second slot 536, between the third abutment surface 542 and the fourth abutment surface 544, allows for the service vehicle 504 to push and pull the container-handling robotic vehicle 506 in the Y-direction.

To disengage the container-handling robotic vehicle 506 from the bracket 508, the bracket 508 is moved upwardly in the Z-direction away from the top surface 562 of the container-handling robotic vehicle 506. In doing so, the first lip 568 of the container-handling robotic vehicle 506 is taken out of the first slot 534, and concurrently the second lip 572 of the container-handling robotic vehicle 506 is taken out of the second slot 536. Likewise, the first post 532 is removed from the groove 560. This can be seen in Fig. 14 and Fig. 15. With this disengagement, the service vehicle 504 is free to move without pushing and pulling the container-handling robotic vehicle 506.

In the same manner to that described with reference to Fig. 13, Fig. 14, Fig. 15 and Fig. 16 (with the detail not repeated, for brevity), the bracket 508 is configured to connect to the container-handling robotic vehicle using the second post 546, third slot 548 and fourth slot 550, in conjunction with the groove 560 of the container-handling robotic vehicle 506. In this way, if the service vehicle 504 approaches a container-handling robotic vehicle 506 facing in an opposite direction to that illustrated in Fig. 13, Fig. 14, Fig. 15, the bracket 508 can engage such a container-handling robotic vehicle using the second post 546, third slot 548 and fourth slot 550.

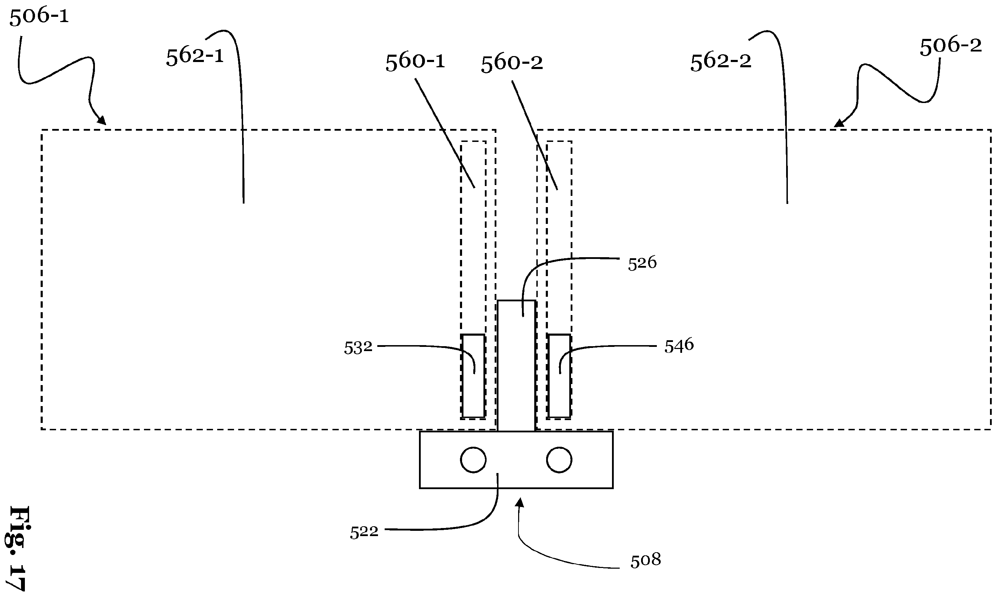

Moreover, the bracket 580 is also capable of connecting to two container-handling robotic vehicles at the same time. Fig. 17 shows top-down conceptual diagram of such an arrangement. The first post 532 of the bracket is received in the first groove 560-1 in the top-surface 562-1 of the first container-handling robotic vehicle 506-1 to connect the bracket 508 to the first container-handling robotic vehicle 506-1 in the manner described with reference to Fig. 13, Fig. 14, Fig. 15 and Fig. 16 (with the detail not repeated, for brevity).

Likewise, the second post 546 of the bracket 508 is received in the second groove 560-2 in the top surface 562-2 of the second container-handling robotic vehicle 506-2 to connect the bracket 508 to the second container-handling robotic vehicle 506-2 in the manner described with reference to Fig. 13, Fig. 14, Fig. 15 and Fig. 16 (with the detail not repeated, for brevity, albeit with the second post 546, third slot 548 and fourth slot 550 instead of the first post 532, first slot 534 and second slot 536).

In an alternative to the slot and lip arrangement for engaging the bracket to the container-handling robotic vehicle, locking pins are used to attach the bracket to the container-handling robotic vehicle. In such an alternative, the first post and second post need not be present. One or more locking pins are inserted through one or more first orifices in the bracket and received in one or more corresponding second orifices in the container-handling robotic vehicle. A first locking pin (or pins) attaches the bracket to the container-handling robotic vehicle to inhibit movement between the bracket and the container-handling robotic vehicle in the X-direction. A second locking pin (or pins) attaches the bracket to the container-handling robotic vehicle to inhibit movement between the bracket and the container-handling robotic vehicle in the Y-direction. The first locking pin (or pins) is inserted into an orifice (or orifices) in a first sidewall of the container-handling robotic vehicle, and the second locking pin (or pins) is inserted into an orifice in a second sidewall of the container-handling robotic vehicle perpendicular to the first sidewall. In such an arrangement, the bracket comprises two perpendicular and connected panels facing in the X-direction and the Y-direction, and that move in the Z-direction, to fit against two perpendicular sidewalls of the container-handling robotic vehicle, with the orifices in said panels.

In a related alternative, the one or more orifices in the container-handling robotic vehicle are arranged in a top surface of the container-handling robotic vehicle, and one or more locking pins attach the bracket to the top surface of the container-handling robotic vehicle by passing the one or more locking pins through one or more orifices in the bracket that correspond to the one or more orifices in the top surface of the container-handling robotic vehicle. In such an arrangement, the bracket comprises a portion that moves in the Z-direction to be positioned against the top surface of the container-handling robotic vehicle, with the orifice(s) in said portion.

In another alternative to the slot and lip arrangement for engaging the bracket to the container-handling robotic vehicle, bolts or screws are used to attach the bracket to the container-handling robotic vehicle. In such an alternative, the first post and second post need not be present. One or more bolts or screws are inserted through one or more first orifices in the bracket and received in one or more corresponding second orifices in the container-handling robotic vehicle that are arranged to receive the thread of the bolt or screw. A first bolt or screw (or first bolts or first screws) attaches the bracket to the container-handling robotic vehicle in the X-direction. A second bolt or screw (or second bolts or second screws) attaches the bracket to the container-handling robotic vehicle in the Y-direction. The first bolt or screw (or first bolts or first screws) is inserted into an orifice (or orifices) in a first sidewall of the container-handling robotic vehicle, and the second bolt or screw (or second bolts or second screws) is inserted into an orifice in a second sidewall of the container-handling robotic vehicle perpendicular to the first sidewall. In such an arrangement, the bracket comprises two perpendicular and connected panels facing in the X-direction and the Y-direction, and that move in the Z-direction, to fit against two perpendicular sidewalls of the container-handling robotic vehicle, with the orifices in said panels.

In a related alternative, the one or more orifices in the container-handling robotic vehicle are arranged in a top surface of the container-handling robotic vehicle, and one or more bolts or screws attach the bracket to the top surface of the container-handling robotic vehicle by passing the one or more bolts or screws through one or more orifices in the bracket that correspond to the one or more orifices in the top surface of the container-handling robotic vehicle. In such an arrangement, the bracket comprises a portion that moves in the Z-direction to be positioned against the top surface of the container-handling robotic vehicle, with the orifice(s) in said portion.

In a further related alternative, the aforementioned alternatives using one or more locking pins, or one or more bolts or screws, are used in combination with the slot and lip arrangement for engaging the bracket to the container-handling robotic vehicle to further secure the connection between the two.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A connection device configured to connect a second vehicle to a first vehicle in an automated storage and retrieval system, wherein the second vehicle and the first vehicle are configured to traverse the storage and retrieval system, and wherein the connection device comprises:
a support member attachable to the first vehicle; and
a bracket engaged with the support member to have substantially free movement in a Z-direction along the support member;
wherein the bracket is configured to move in the Z-direction to connect the second vehicle to the first vehicle when the second vehicle is adjacent to the first vehicle, such that the first vehicle is capable of moving the second vehicle in an X-direction and a Y-direction; and
wherein the X-direction and Y-direction are perpendicular to one another and are main directions of vehicle travel in the automated storage and retrieval system, and the Z-direction is perpendicular to the X-direction and the Y-direction.

2. The connection device of claim 1, wherein the bracket comprises:
a first slot configured to receive and engage a first lip of the second vehicle such that the first vehicle is connected to the second vehicle to move the second vehicle in the X-direction; and
a second slot configured to receive and engage a second lip of the second vehicle such that the first vehicle is connected to the second vehicle to move the second vehicle in the Y-direction.

3. The connection device of claim 2, wherein the first slot is defined between a first abutment surface of the bracket and a second abutment surface of the bracket;
the first abutment surface is configured to form a close fit with a first side of the first lip and the second abutment surface is configured to form a close fit with a second side of the first lip, the second side of the first lip being opposite to the first side of the first lip;
wherein the second slot is defined between a third abutment surface of the bracket and a fourth abutment surface of the bracket;
the third abutment surface is configured to form a close fit with a first side of the second lip and the fourth abutment surface is configured to form a close fit with a second side of the second lip, the second side of the second lip being opposite to the first side of the second lip.

4. The connection device of claim 3, wherein the bracket comprises a base with a wall extending perpendicular from a first surface of the base, and a first post adjacent to and displaced from both the wall and the first surface of the base, and wherein:
the first abutment surface comprises a first surface of the wall facing the first post;
the second abutment surface comprises a first surface of the first post facing the wall;
the third abutment surface comprises the first surface of the base facing the first post; and
the fourth abutment surface comprises a second surface of the first post facing the base.

5. The connection device of claim 4, wherein the bracket further comprises a connecting member that connects the first post with the wall and the base such that the first post extends from the connecting member, and the wall extends from both the connecting member and the base.

6. The connection device of claim 5, wherein the connecting member is a top panel that extends outwardly from an upper end of the bracket.

7. The connection device of any one of claims 2 to 6, wherein the bracket is configured to engage a recessed groove in an upper surface of the second vehicle, wherein the recessed groove is arranged proximal to an end of the upper surface, and the first lip is defined between a first sidewall of the recessed groove and a first edge of the upper surface, and the second lip is defined between a second sidewall of the recessed groove and a second edge of the upper surface, wherein the second sidewall is perpendicular to the first sidewall, and the second edge is perpendicular to the first edge.

8. The connection device of any preceding claim, wherein the bracket is configured to connect to a plurality of vehicles, the plurality of vehicles comprising the second vehicle and a third vehicle; and
wherein the bracket comprises:
a third slot configured to receive and engage a first lip of the third vehicle such that the first vehicle is connected to the third vehicle to move the third vehicle forward and backward in the X-direction; and
a fourth slot configured to receive and engage a second lip of the third vehicle such that the first vehicle is connected to the third vehicle to move the third vehicle forward and backward in the Y-direction.

9. The connection device of claim 8 when depending on claim 4, wherein the third slot is defined between a fifth abutment surface of the bracket and a sixth abutment surface of the bracket;
the fifth abutment surface is configured to form a close fit with a first side of the first lip of the third vehicle and the second abutment surface is configured to form a close fit with a second side of the first lip of the third vehicle, the second side of the first lip of the third vehicle being opposite to the first side of the first lip of the third vehicle;
wherein the fourth slot is defined between a seventh abutment surface of the bracket and an eighth abutment surface of the bracket;
the seventh abutment surface is configured to form a close fit with a first side of the second lip of the third vehicle and the eighth abutment surface is configured to form a close fit with a second side of the second lip of the third vehicle, the second side of the second lip of the third vehicle being opposite to the first side of the second lip of the third vehicle;
wherein the wall of the bracket extends from a position on the base that bisects the first surface of the base, and the bracket further comprises a second post adjacent to and displaced from both the wall and the first surface of the base and on an opposite side of the wall to the first post, and wherein:
the fifth abutment surface comprises a second surface of the wall, opposite to the first surface of the wall, and facing the second post;
the sixth abutment surface comprises a first surface of the second post facing the wall;
the seventh abutment surface comprises the first surface of the base facing the second post; and
the eighth abutment surface comprises a second surface of the second post facing the base.

10. The connection device of any preceding claim, wherein the bracket is configured to be connected to the second vehicle using one or more locking pins, one or more brackets, and/or one or more screws.

11. The connection device of any preceding claim, wherein support member comprises one or more projecting members configured to be attached to the first vehicle, and wherein the bracket comprises one or more receiving portions corresponding to and configured to receive the one or more projecting members such that the bracket is configured to freely move in the Z-direction guided along the one or more projecting members, and is inhibited from moving in the X-direction and the Y-direction by an interaction between the projecting members and the receiving portions.

12. The connection device of claim 11, wherein the one or more receiving portions are arranged in a/the base of the bracket.

13. The connection device of any preceding claim, wherein the bracket is formed from a plastic or plastic-based composite material.

14. The connection device of any preceding claim, wherein the second vehicle is a container-handling robotic vehicle configured to traverse the automated storage and retrieval system to store and retrieve containers; and/or
wherein the first vehicle is a service vehicle configured for providing servicing and repair operations in the automated storage and retrieval system.

15. A vehicle configured to traverse an automated storage and retrieval system, wherein the vehicle has at least one connection device according to any preceding claim attached thereto.
